Europäisches Patentamt

European Patent Office

Office européen des brevets

(19)

(11) Publication number: **0 339 672**
**A2**

## EUROPEAN PATENT APPLICATION

(12)

(21) Application number: **89107772.9**

(22) Date of filing: **28.04.89**

(51) Int. Cl.⁴: **G11B 7/007 , G11B 7/09 , G11B 7/00**

(30) Priority: **28.04.88 JP 104078/88**

(43) Date of publication of application:
**02.11.89 Bulletin 89/44**

(84) Designated Contracting States:
**DE FR NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Hirai, Shigetoshi**
**303 Kariyado Nakahara-ku**
**Kawasaki-shi Kanagawa-ken(JP)**
Inventor: **Kobori, Hiromichi**
**Lionsmanshion-imaicho 404 519-18 Imai-cho**
**Hodogaya-ku Yokohama-shi**
**Kanagawa-ken(JP)**
Inventor: **Ohsawa, Hideaki**
**2-12-6-105 Namiki Kanazawa-ku**
**Yokohama-shi Kanagawa-ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) Sampled servo type optical recording medium and optical recording apparatus using the same.

(57) In an optical recording medium (100) rotatable around a center thereof, it includes a spiral-shaped or coaxial-shaped track (2) formed on a surface of the optical recording medium (100) with respect to the center. The track (2) is constituted by at least a plurality of data regions (22) on which data are optically recorded, and a plurality of servo control regions (21) positioned between the successive data regions, on which servo control information of the recording medium (100) has been previously recorded. Each of the servo control regions (21) contains at least a timing information region (26) formed as at least two continuous sync patterns along a rotation direction of the recording medium (100), whereby a reference clock required for the servo control of the recording medium (100) is produced by reproducing the sync patterns from the respective servo control regions (21).

FIG. 2

# SAMPLED SERVO TYPE OPTICAL RECORDING MEDIUM AND OPTICAL RECORDING APPARATUS USING THE SAME

Background of the Invention

Field of the Invention

The present invention generally relates to an optical recording medium, an optical recording apparatus in which various information is optically recorded and/or reproduced. More specifically, the present invention is directed to a sampled servo type optical recording medium and optical recording apparatus where both servo information and data information have been previously recorded in a preformat mode on separate regions on the same track of the recording medium.

Description of the Related Art

As an information recording medium, an optical disk has been widely utilized so as to optically recording/reproducing information such as data and servo control signals thereon. In particular, to increase the recording density of the recent optical disk and furthermore arbitrarily access the recorded data, the servo information has been previously recorded (i.e., the preformat mode). Among these recent developments on the optical disk, a so-called "sampled servo system" has been proposed in which the servo information recording region is completely separated from the data information recording region in order to prevent signal interferences from each other.

Since, as is known, the servo information (i.e., timing information) is intermittently acquired from the sampled servo type optical disk, the acquired servo information is sampled and held. Accordingly, this sampling timing must be correctly controlled. Furthermore, another technical requirement exists in that the read/write reference clock correctly synchronized with the rotation of the optical disk must be produced so as to prevent the incorrect writing/reading of the data information due to fluctuations in the disk rotation.

In, for instance, Japanese KOKAI(Disclosure) patent application No. 62-143232 (opened on June 26, 1987), there is disclosed that the reference clock followed to the fluctuations in the optical disk rotations is produced from the servo information intermittently obtained from the optical disk. That is, the reference clock is multiplied by the PLL (phase-locked loop) circuit. In this prior art circuit, the timing information is acquired by an signal timing clock, and then, the phase comparison by the PLL circuit is carried out at the appearance of the timing clock.

Since the reference clock is reproduced by way of the phase comparison based upon only one timing clock, an allowable value for the fluctuations in the rotations of the optical disk, say, within ± 0.1% at 1,800 rpm, great necessities are required in various increases of the rotation precision, preformating precision, and shape-forming precision of the optical disk. These requirements will provide high-cost problems.

The number of the servo information is, on the other hand, determined by the bandwidths of focus servo and tracking servo, and the information number to the reference clock reproducing circuit. In view of the servo bandwidth, although 1,000 pieces per one rotation are sufficient at the disk rotation of 1,800 rpm, the servo information on 1,700 pieces per one rotation is required, taking account of the clock reproduction. While considering the construction inherent to the sampled servo type optical disk, the smaller the number of the servo information regions becomes, the larger the data information regions become, resulting in a higher disk utilization efficiency (higher formating efficiency). However, according to the conventional sampled servo system, the larger number of the servo information of approximately 1,700 pieces/rotation is necessarily required for reproducing the reference clock this causes the lower efficiency of the data recording density.

In addition, the timing information among the above-described servo information has been normally recorded on the conventional optical disk in a form of so-called "pits", i.e., point-shaped concaves which are separately formed every track. In case that the tracking operation is temporarily uncontrolled due to seeking operations and insufficient tracking operations, there are possibilities that when the reproducing optical spot is scanned across the successive tracks, this spot may pass through the intermediate area between the successive pits, namely the optical spot may be scanned across small portions of these tracks in an oblique direction with respect to the tracks. As a result, the amplitudes of the reproduced timing signals are not stabilized according to the conventional sampled clock system. In other words, these timing signals may not be correctly reproduced with having constant amplitudes.

As previously described in detail, to achieve the high reproducing precision of the reference clock (e.g., jitter below than ± 1 ns at 1,800 rpm of disk rotation speed) in the conventional sampled servo system (servo information number = 1,300 to 1,700 pieces/rotation), the fluctuations in the disk rotation speed must be lowered (e.g., ± 0.1%). As a consequence, the higher manufacturing precision of the optical disk is necessarily required, resulting in the higher manufacturing cost. Since a ratio of the servo information recording region to the data information recording region within the optical disk must be selected to be greater than the theoretical ratio, there is another problem in the data occupation efficiency for the entire disk memory capacity.

Furthermore, since as the respective timing signals of the servo information, a single circular pit is formed on the optical disk, the levels of the reproduced timing signals are fluctuated during out of the tracking operation, so that there is still another problem in the unstable reproduction of the reference clock.

Summary of the Invention

The present invention has been made in an attempt to solve the above-described conventional drawbacks, and therefore has an object to provide both an optical recording medium and also an optical recording apparatus, in which an allowable limit value for fluctuations in disk rotation speed and an allowable limit value in manufacturing precision of the optical recording medium may be set to large values, and also stable recording operations may be realized even when the tracking operation is uncontrolled.

An optical recording medium (100) rotatable around a center thereof, according to the present invention, comprises:
a spiral-shaped track, or a plurality of coaxial tracks (2) formed on a surface of the optical recording medium (100) with respect to the center(0), the track (2) being constituted by at least a plurality of data regions (22) on which data are optically recorded, and a plurality of servo control regions (21) positioned between the data regions, in which servo control information of the recording medium (100) has been previously recorded, and each of the servo control regions (21) containing at least a timing information region (26) formed as at least two continuous sync patterns along a rotation direction of the recording medium (100), whereby a reference clock required for the servo control of the recording medium (100) is produced by reproducing the sync patterns from the respective servo control regions (21).

Furthermore, in an optical recording apparatus (200) employing an optical recording medium (100) rotatable around a center (0) thereof including a spiral-shaped track, or a plurality of coaxial tracks (2) formed on a surface of the optical recording medium (100) with respect to the center, said track (2) being constituted by at least a plurality of data regions (22) on which data are optically recorded, and a pluralaity of servo control regions (21) positioned between the successive data regions, on which servo control information of the recording medium (100) has been previously recorded, and each of the servo control regions (21) containing at least a timing information region (26) formed as at least two continuous sync patterns along a rotation direction of the recording medium (199), whereby a reference clock required for the servo control of the recording medium (100) is produced by reproducing the sync patterns from the respective servo control regions (21),
the optical recording apparatus (200) according to the invention, comprises:
means for optically reading out the sync patterns from the timing information region (26) within the servo control regions (21) prior to recording/reading operations of the data on/from the data regions (22); and,
means (50) for producing the reference clock as timing information based upon the sync patterns derived from the reading means, so as to control the data recording/reading operations in synchronism with the reference clock.

Brief Description of the Drawings

For a better understanding of the present invention, reference is made to the following descriptions in conjunction with the accompanying drawings, in which:
Fig. 1 schematically illustrates a construction of a sampled servo type optical disk according to the present invention;
Fig. 2 is an enlarged disk portion of the sampled servo type optical disk shown in Fig. 1;
Fig. 3A is an illustration of the conventional servo block of the optical disk;

3

Fig. 3B to 3D are illustrations of various servo blocks of the optical disk according to the preferred embodiment of the invention;

Figs. 4A and 4B are illustrations of reproductions of reference clocks according to the invention;

Figs. 4C and 4D are illustrations of reproductions of reference clocks according to the conventional optical disk;

Fig. 5 is a schematic block diagram of a reference clock reproducing circuit according to the present invention;

Fig. 6 is an illustration for explaining the reference clock reproduction according to one preferred embodiment;

Fig. 7 is an illustration for explaining the reference clock reproduction according to another preferred embodiment;

Fig. 8 is an illustration for explaining the formation of the servo block based upon the reference clock reproduction shown in Fig. 7, and,

Figs. 9A and 9B represent calculation results of the single clock bit and multi clock bits.

Detailed Description of the Preferred Embodiments

BASIC IDEA

Before proceeding with various types of preferred embodiments, a basic idea of the invention will now be described.

An optical recording medium such as an optical disk, according to the present invention, comprises a spiral-shaped track or coaxial-shaped tracks. The track is constituted by at least a plurality of data regions for optically recording data thereon, and a plurality of servo regions provided inbetween the successive data regions, into which information for tracking purposes (servo control information) has been recorded. The feature of the optical recording medium is such that at least more than two pieces of timing information, e.g., two pits are continuously formed as a sync pattern in each of these servo regions.

Also, an optical recording apparatus according to the present invention is characterized in that prior to recording and reading the data by use of the above-described optical recording medium, the sync pattern of the servo region is optically read so as to produce timing information (reference clock) from the read sync pattern, and the recording operation, or reading operation of the data to the data region is controlled in response to the produced reference clock (timing information).

In particular, an optical recording medium is featured in that the sync pattern extends from a rotation center toward an outer thereof in a radial form, and is shaped as a rectangular pattern between the successive tracks along the radial direction.

Since the timing information is introduced in the servo information region as a continuous sync pattern constituted by at least more than two pits, when a discontinuity in phases between a reproduction signal and a reference clock is produced in a segment unit constructed by the servo information and data information due to variations in the disk rotation and an incompleteness of the disk shape, a PLL (phase-locked loop) circuit for generating the reference clock can be correctly followed to the reproduction signal in response to only the timing information produced within a single segment unit. Furthermore, even when a part of the timing information is dropped out due to an occurrence of defects, the reference clock can be reproduced from the remaining timing information. When, an optical disk made of resin or glass is rotated at a speed of, for instance, 1,800 rpm, and the servo information is equal to approximately 1,000 pieces/rotation which is calculated from the servo bandwidth, both the focusing servo and tracking servo are in the normal operation. Taking account of these conditions, if data lengths of the data information are made longer than those of the servo control information, the utilization efficiency of the disk capacity (i.e., format efficiency) can be increased According to the invention, due to improvements in the reproductions of the timing information (sync pattern), the servo control information can be reduced to a limit value required for the servo bandwidth. In other words, if the capacity is the same, a size of a pit functioning as a recording unit of an optical disk is selected to be larger than a diameter of a light beam spot for a reading or writing operation, so that an optical readout precision can be increased. Similarly, according to the invention, a temporal timing precision for detecting a signal can be lowered, and readout errors from the equivalent S/N detection signal can be reduced.

Since the timing information is constituted in a continuous form along a radial direction, e.g., in an elongated stripe, the timing information having constant amplitudes can be continuously detected even if the tracking servo is out of control during the seek operation, or just after the starting operation. As a consequence, the reference clock can be stably reproduced.

## CONSTRUCTION OF OPTICAL RECORDING MEDIUM

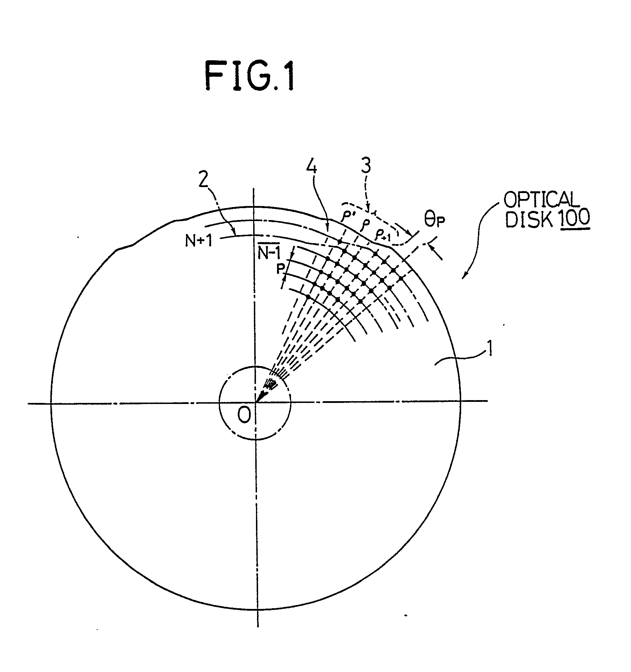

Fig. 1 schematically illustrates a sampled servo type optical disk 100 according to a preferred embodiment of the invention. On a base plate 1 of the optical disk 100, a large quantity of tracks 2 are formed with a pitch "P" in a coaxial form, or a spiral-shaped track is formed with the same pitch. In the preferred embodiment shown in Fig. 1, the tracks 2 are formed in a coaxial shape.

The optical disk 100 further includes a plurality of radial lines 3 which pass through a rotation center "0" of the disk 100 and equally subdivide an entire area of the disk 100 at an angle of "$\Theta_p$", and a plurality of servo blocks (will be discussed later) formed at cross points 4 between the respective radial lines 3 and tracks 2 as a region for previously recording the servo control information (preformat region). The preformat region is recorded by utilizing any one of variations in local shapes on the disk 100, variations in the reflectivity, and variations in the polarization angle of the reflection light, or a combination thereof.

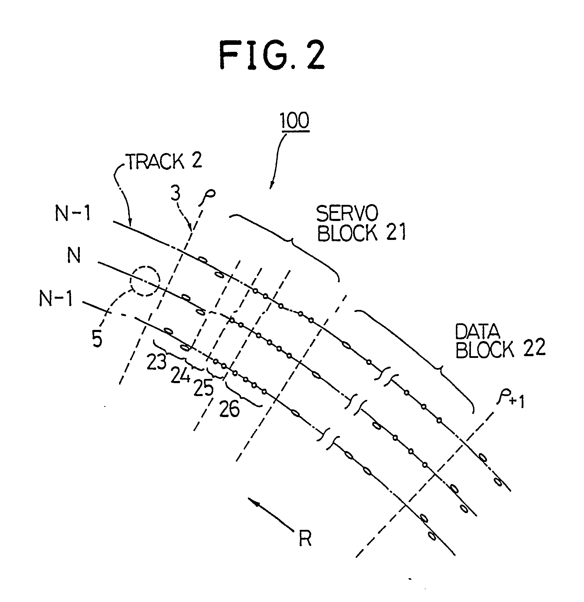

Fig. 2 is an enlarged disk portion of the optical disk shown in Fig. 1, for illustrating a positional relationship between a servo block 21 and a data block 22.

The optical disk 100 is rotated in a direction indicated by an arrow "R" shown in Fig. 2. A reproduction signal is obtained by detecting the variations in the reflectivity of an optical beam spot 5, or variations in the polarization angle. While rotating this optical disk 100, the servo block 21 and data block 22 are alternately reproduced along the track 2.

As is known as the sampled servo techniques, having regard with the functions of the respective elements constituting the servo block 21, the servo block 21 is arranged by an information region 23 for mainly the tracking signal; and information region 24 for focusing the optical beam spot 5 (i.e., focusing operation); a track accessing information region 25 for mainly judging the track number (0, ---, N-1, N, N + 1, ---); and a timing information region 26, functioning as a main feature of the invention, which is used for the writing operation, reading operation, and reproduction of a sampling timing reference clock. The data block 22 of the optical disk 100 corresponds to a region which can be arbitrarily used by a disk user. The data is written into this data block 22 based upon a signal in synchronism with the reference clock that has been produced by utilizing a sync pattern signal derived from the timing information region 26. Otherwise, the data has been written therein based on this signal.

## TIMING INFORMATION REGION OF SERVO BLOCK

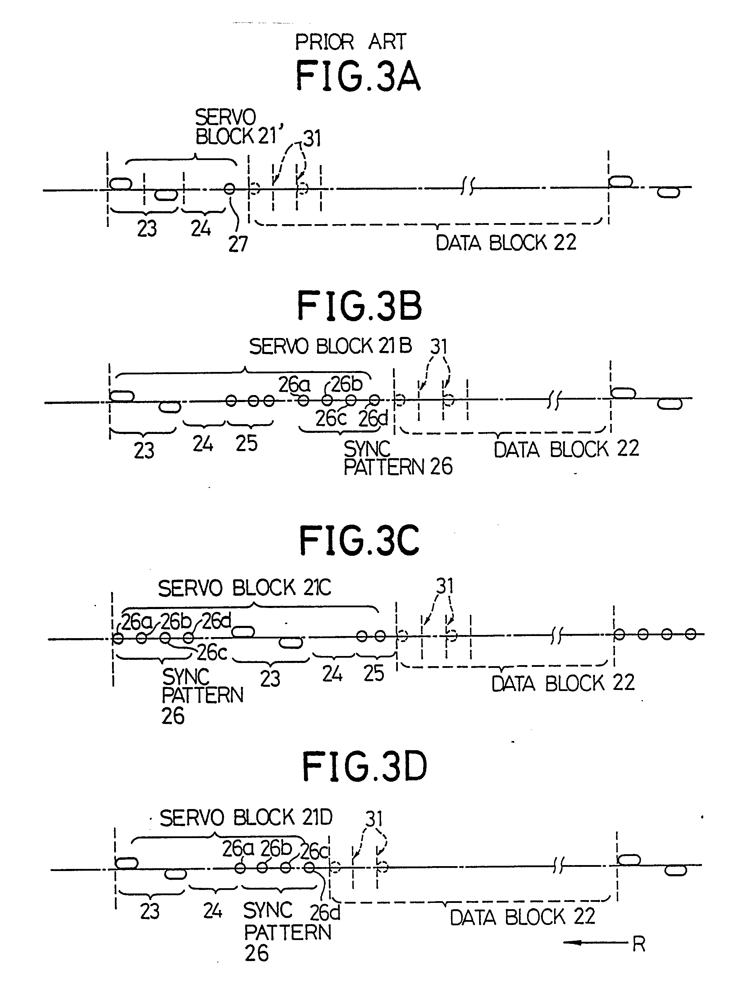

Fig. 3A illustrates a conventional sampled servo type optical disk having a servo block section constructed of a servo block 21' and a data block 22.

Figs. 3B to 3D illustrate servo block sections of the sampled servo type optical disk according to preferred embodiments of the invention. More particularly, the timing information region 26 within the respective servo blocks 21B to 21D constitutes a main feature of the invention. For a better understanding of this feature, the following description will now be made in comparison with the conventional servo block 21'.

That is, as shown in Fig. 3A, only one pit is formed as the conventional timing information 27 on the base plate of the conventional optical disk. In contrast therewith, four pits 26a to 26d are continuously formed along the rotation direction "R" as a sync pattern as shown in Figs. 3B to 3D. In summary, at least more than two pits are continuously formed as the sync pattern in the timing information region 26 of the respective servo blocks 21B to 21D.

The data block 22 shown in Fig. 3 is divided by imaginary dividing lines 31 by means of the reference clock. Thus, the data can be written and/or read in accordance with these imaginary lines 31. Similarly, the optical reading operations effected in the servo block are performed in synchronism with a section similar to the above-described imaginary line 31. As a result, the reference clock is continuously required to maintain a constant phase relationship with respect to the disk plane. As is known in the sampled servo system, this reference clock is produced based upon the reproduction signal derived from the timing information region 26. Consequently, it is important to constitute such a timing information that the reference clock can be easily, stably reproduced. This can be done by the sync pattern (timing information) 26 according to the invention.

## FEATURES OF SYNC PATTERN (MULTI CLOCK)

Various features of the servo blocks 21B to 21D will now be described with reference to Figs. 3B to 3D.

In the first servo block (servo control information region) 21B illustrated in Fig. 3B, since the timing information (namely, sync pattern) region26 is positioned just before the data block 22, the reliabilities on the phase coincidence of the reference clock with respect to the data stored in the data block 22 can be relatively improved.

In the servo block 21C represented in Fig. 3C, as the timing information region 26 is positioned at a head portion of this servo block 21C, the reliabilities on the reading of various signals recorded on the servo block 21C can be relatively improved.

In the last servo block 21D shown in Fig. 3D, since the address detecting signal region 25 has been eliminated, the resultant length of this servo block 21D is shortened eventually. As a result, the lengths of all of the servo blocks are shorter than those of all of the data blocks, so that the overall format efficiency can be increased.

It should be noted that the construction elements, e.g., regions 23 and 24 within the respective servo blocks 21B to 21D are not necessarily designed in such a manner that each of these elements occupies the independent region as illustrated in Figs. 3B to 3D. In other words, these information regions 23 to 25 other than the timing information region 26 may be mixtured with each other without modifying the sync pattern form 26 of the pits 26a to 26d.

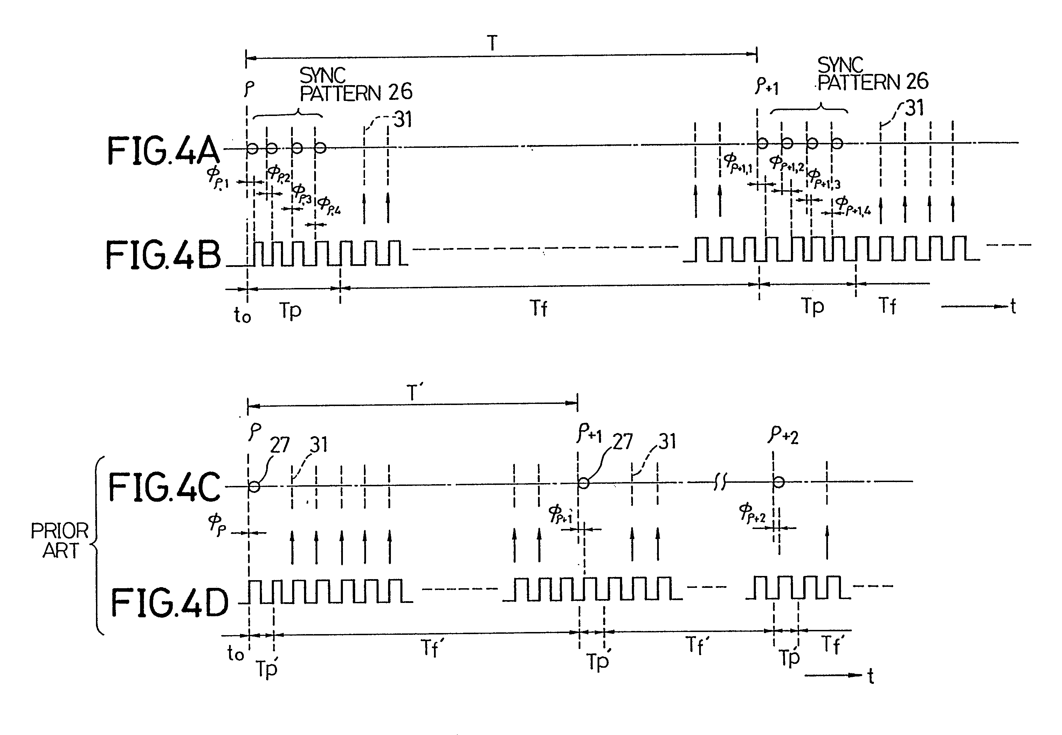

With reference to Fig. 4, validities on the sync pattern which is formed by continuously repeating more than two separate pits 26a, ---, 26d as the timing information, will now be described in detail. The abscissa of Fig. 4 denotes a time elapse.

Fig. 4A represents a timing information region according to the invention (referred to as a so-called "multi clock" by the Applicants) from which a burst signal having a time period of "T" can be detected.

Fig. 4B indicates a reference clock which, in general, has a phase difference of "$\Phi$" with respect to the block of Fig. 4A.

Assuming now that a head position "P" of the multi clock is detected at a time instant "to". In accordance with time lapse, as shown in Figs. 4A and 4B, there are a phase difference "$\Phi_p.1$" at a first clock of the multi clock ; a phase difference "$\Phi_p.2$" at a second clock thereof; a phase difference "$\Phi_p.3$" at a third clock thereof; and a phase difference "$\Phi_p.4$" at a fourth clock thereof. Symbol "$T_p$" of Fig. 4 represents a time period during which a reference clock generating circuit (will be described later) is operated so as to set the above-described phase differences $\Phi_p.1$ to $\Phi_p.4$ to zero, whereas symbol "$T_f$" denotes another time period during which a constant clock is produced. In Figs. 4A and 4B, there are shown that the third and fourth phase differences $\Phi_p.3$ and $\Phi_p.4$ become zero due to the timing information 26 containing four time periods, the reference clock can be constantly maintained during the time period of "$T_f$", and the subdividing lines 31 are produced in the temporal axis of the data block. In the subsequent time instant "$p+1$" of the next multi clock after the first time period "T" has elapsed, another phase error (difference) "$\Phi_p+1.1$" occurs because of the variations in the rotation of the disk rotating apparatus, the deformation of the optical disk 100, the mounting errors, the variations in the temporal axis during the preformat operation, and also the fluctuations on the reference clock. Similarly, as illustrated in Figs. 4A and 4B, this phase error $\Phi_p+1.4$ can be corrected to zero by detecting the multi clock having the four time periods during the time period "$T_p$" within the second time period.

Furthermore, for a better understanding of the above-described features according to the preferred embodiment, reference is made to the following conventional example shown in Figs. 4C and 4D.

That is, Figs. 4C and 4D illustrate reproductions of the conventional reference clock from the timing information region 27. In this case, the reference clock is reproduced from a single pit pattern 27. Since one time period of $T_f'$ is longer than the other time period of $T_p'$, and also only one phase comparison operation is carried out, a phase difference, or error occurring in the time period of $T_f'$ may not be corrected to zero during a single time period of $T_p'$. As a result, such a phase difference may be maintained at a smaller value, but not zero by averaging the plural phase comparisons among the signals acquired at a plurality of time instants $p$, $p+1$, $p+2$ and so on. As a consequence, if a large phase difference exceeding over one time period of the reference clock is accidentally produced during the time period $T_f'$, the system must wait

6

for several pieces of the subsequent servo blocks (not shown) until the reproduced reference clock is brought into the stable condition. Thus, it is impossible to write and/or reproduce the data into the data blocks under this condition.

To the contrary, according to the multi clock of the preferred embodiment as shown in Figs. 4A and 4B, the phase differences occurring in the reference clocks at the servo block section can be reduced to zero, or a small constant value by processing a plurality of sync clocks, or a sync pattern 26 (four sync clocks in the preferred embodiment). As a result, even when the phase between the successive sync clocks is accidentally shifted by more than one clock time period during the clock generating time period of "$T_f$" due to the large variations in the disk rotation and noise mixtures, such a large phase difference can be quickly reduced to zero. Accordingly, the normal data writing and/or reading operation can be accomplished in the data block just after the subsequent servo block (not shown in detail).

A qualitative analysis will now be made on the differences of the above-described characteristics.

To synchronize a reference clock with a specific pattern recorded on an optical disk, both a frequency of the reference clock and a phase of the reference clocks must be in coincident with each other. Although this phase coincidence can be checked by comparing a single clock, the frequency needs to be determined by checking at least two time periods of the reference timing regions. As a result, in the conventional case as shown in Figs. 4C and 4D where only a single reference timing pulse is produced, the reference clock cannot be ensured unless a plurality of servo blocks are processed.

To the contrary, in the multi clock having such a sync pattern constituted by at least two continuous pits 26a, 26b, the reproduction of the reference clock can be stabilized by checking only one servo block according to the feature of the present invention.

As previously described, an allowable limit value can be made large, as compared with the conventional servo block, with respect to the disk rotation variations, preformat temporal axis variations of the disk manufacturing, disk deformation, errors in mounting the disk, and fluctuations in the reference clock, because the multi clock is employed according to the present invention.

A description will now be made to another feature of th present invention.

That is, the utilization efficiency of the disk storage capacity can be increased by introducing the idea of the multi clock into the servo block 22. In other words, the format efficiency can be improved according to the present invention.

The total number of the data to be recorded on the data block may be increased at the same area by reducing an occupation ratio of the servo block to the data block, resulting in an increase of the format efficiency. In general, since there are limitations in the lengths of the servo block, as well as the recordable area of the optical disk, the total number of the servo blocks must be necessarily reduced. If the total number of the servo blocks is reduced, the time period "T" of the timing information region plus the data block, shown in Fig. 4A, is prolonged than the corresponding time period of $T'$ in the conventional case shown in Fig. 4C. In the conventional case, since the time period during which the phase comparison information is acquired is prolonged, the phase errors due to the variations in the disk rotations must be necessarily reduced, taking account of the prolonged time period. However, it is practically impossible to reduce the various causes occurring in the phase errors to a predetermined small value in view of the present disk-manufacturing techniques and cost matters. As a consequence, an upper limitation is necessarily determined in the format efficiency. Generally speaking, the number of the servo block required for considering the servo bandwidths of the focusing and tracking servo regions is determined by 1,000 pieces/rotation. However, to suppress the phase errors as small as possible, the desirable servo block number is amount to 1,700 pieces/rotation in a practical case.

As is apparent from Figs. 4A to 4D, although the time period "$T_\rho$" (see Figs. 4A and 4B) during which a reference clock reproducing generating circuit is operated is prolonged than the time period "$T_\rho{}'$" (see Figs. 4C and 4B) of the conventional case, the reference clock can be stably produced by employing such a prolonged sync pattern 26 according to the present invention. As a consequence, even if the relatively prolonged time period "Tp" is required as compared with the conventional time period $T_\rho{}'$, the total number of the sync patterns 26, i.e., multi clock can be reduced, as compared with the total number of the conventional sync bits 27, over the entire optical disk 100. Thus, since one time period "$T''$" according to the present invention can be set to considerably longerthan one time period "$T'$" of the conventional case, the entire data capacity of the optical disk 100 can be increased and therefore the format efficiency can be increased (compare Fig. 4A with Fig. 4C.)

If a signal modulating/demodulating system such as the 2-7 demodulating method is employed which is not susceptible to the phase differences in the data block section (i.e., phase differences during the time period of "$T_f$"), the above-described allowable limit value may be furthermore set to large with respect to the disk rotation variations and disk deformation.

## CIRCUIT ARRANGEMENT OF OPTICAL RECORDING APPARATUS

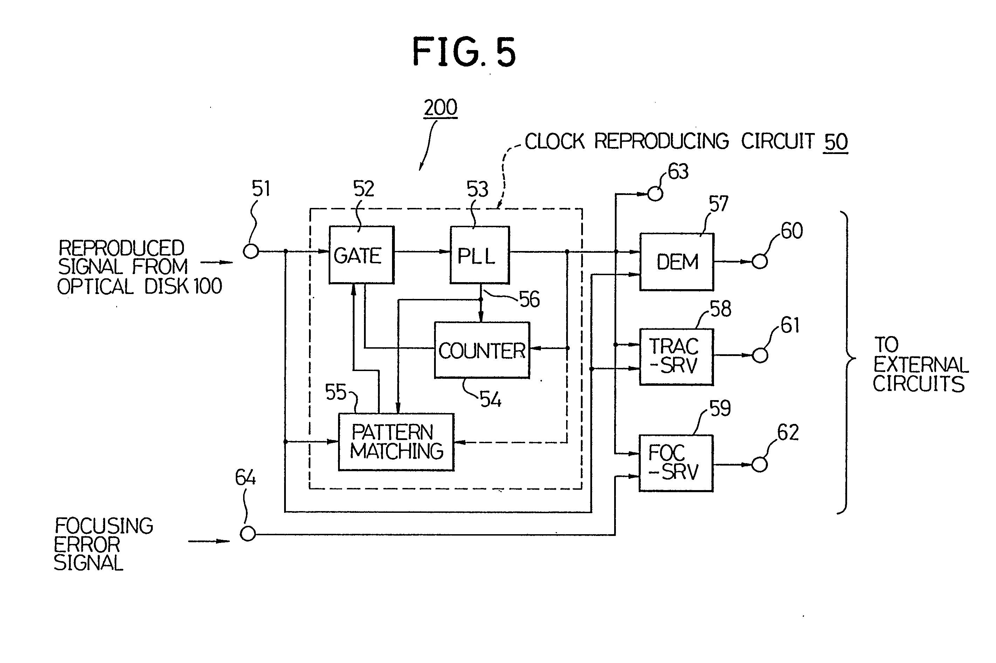

Fig. 5 is a schematic block diagram of an optical recording apparatus 200, according to the invention, capable of performing the above-described operations.

The reproduction signal(sync pattern signal) derived from the optical disk 100 shown in Fig. 1, is input into a terminal 51 of a clock reproducing circuit 50. The input reproduction signal is then supplied via a gate circuit 52 employed in the clock reproducing circuit 50 to a PLL (phase-locked loop) circuit 53 as a reference signal. This gate circuit 52 is controlled by operating either a counter 54, or a pattern matching circuit 55 in such a manner that the timing information (sync pattern) signal passes through this gate circuit 52 in response to only the timing signal reproduced from the above-described timing information region, i.e., multi clock region 26. The PLL circuit 53 intermittently receives the timing information signal through the gate circuit 52, and produces a temporally continuous reference clock as illustrated in Fig. 4B. This reference clock is supplied to both a counter 54 and a demodulator circuit 57. While the PLL circuit 53 is operated under a stable condition, the reference clock is counted by the counter 54 in order to predict the position of the subsequent timing information, and also cause the gate circuit 52 to be opened, whereby the reproduction signal from to terminal 51 is supplied to the PLL circuit 53. To the contrary, when the PLL circuit 53 is under an unstable condition, a pattern matching operation by the pattern matching circuit 55 is carried out in such a manner that a specific pattern is detected which has been recorded on the region, for instance, the address detecting signal region 25 shown in Fig. 3B, preceding the present timing information region 26. Thus, the gate circuit 52 is opened.

Such a selecting operation is performed based upon a phase lock signal 56 derived from the PLL circuit 53. In other words, the sampled servo system operation is carried out.

Alternatively, the phase-locked loop operation may be effected with continuously employing either the counter 54, or pattern matching circuit 55 without utilizing this selecting circuit 56.

In response to the reference clock supplied from the PLL circuit 53, the demodulator circuit 57, tracking servo circuit 58, and focusing servo circuit 59 are operated in such a way that the control timings of the respective circuits are synchronized with each other. That is, various operations by these circuits 57, 58, and 59 can be synchronously effected based on the reference clock. An output terminal 63 is to output the reference clock derived from the PLL circuit 53. From other output terminals 60, 61, and 62, various signals such as the tracking servo control signal are supplied to external circuits, e.g., a servo drive modulator circuit. An input terminal 64 is to receive a focusing error signal.

It should be under'stood that in the above-described preferred embodiment, the system where the reproduction signal derived from the specific pattern is utilized, has been employed as the matching operation by the pattern matching circuit 55. However, more simple matching system may be utilized so as to detect the servo block from such an optical disk, e.g., an opto-magnetic recording medium that a recording medium whose surface shape is not changed or whose reflectivity is not changed is employed. That is, when the servo block sections are recorded with aid of changes in the surface shape, or the reflectivity, the signal exclusively derived from the servo block sections may easily be detected by employing an optical detector which does not detect the polarization light.

While has been described above, since the multi clock regions are employed in the optical recording apparatus 200 according to the invention, the reference clock can be stably reproduced so that the PLL circuit 53 can be readily captured.

## VARIATIONS OF MULTI CLOCK REGION

A description will now be made to other preformat shapes of the multi clock region.

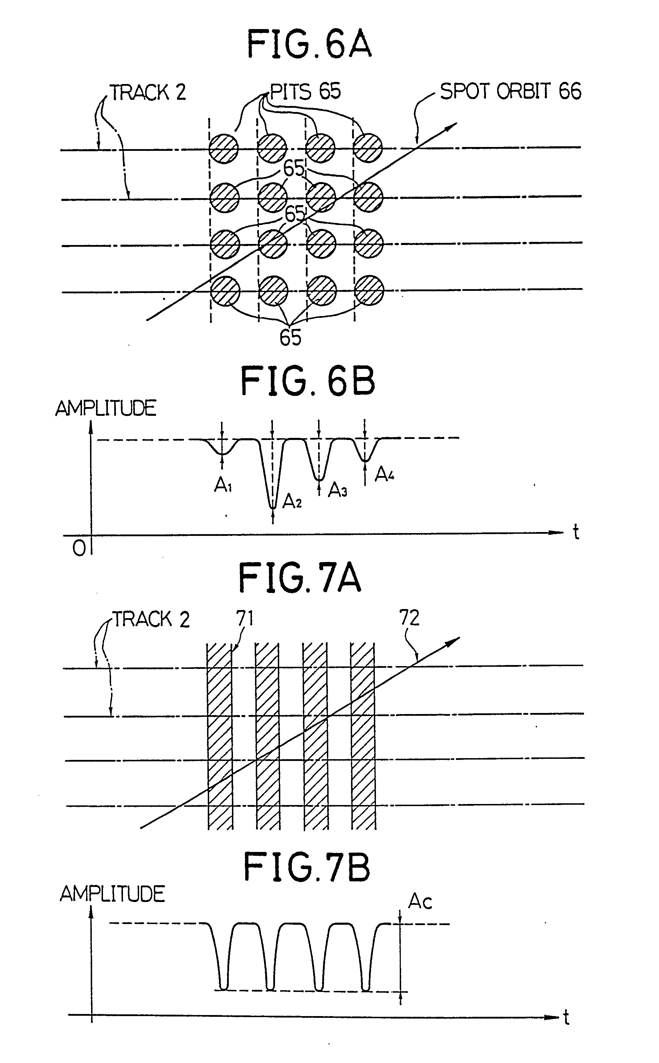

Fig. 6A illustrates one example of multi clock regions where four continuous pits 65 are formed along the tracks 2, on the completely separated tracks 2 as the multi clock sections. These pits 65 are processed to be locally detectable by an optical detecting means on an optical disk. For instance, these pits 65 may be optically detected by utilizing the various variations in the shape, reflectivity and polarization characteristics of the reflection light. When a light beam spot travels along an orbit 66 during, for instance, the seek operation, a reproduction signal (sync pattern signal) as shown in Fig. 6B is obtained. In this example, it is assumed that the reflectivity at the pit region is lowered and thus the signal amplitudes "A" are changed downwardly in a graphic representation of Fig. 6B. When the light spot passes through the intermediate regions between the adjacent pits 65, the amplitute of the reproduced signal is small as denoted by "$A_1$",

whereas when the light beam spot pass across the pit itself 65, the amplitude of the reproduced signal is large, as illustrated by "$A_2$". More specifically, if the light beam spot does not substantially pass over an entire area of a certain pit 65 as illustrated along the beam orbit 66, an amplitude of reproduced timing information signal (sync pattern signal) does not have a sufficient high value such as "$A_2$" shown in Fig. 6B. As a result, the timing signal input into the PLL circuit 53 becomes unstable, so that unstable reference clocks may be reproduced from the reference clock reproducing circuit 50.

In Fig. 7A, there is shown an improved multi clock region according to another example. In this mult clock region, four sync patterns 71 are formed which elongate in a direction perpendicular to the tracks 2. That is, these sync patterns 71 bridges the adjacent tracks 2 in the vertical direction as shown in Fig. 7A. Under this sync pattern condition, even when the light beam spot passes across these sync patterns 71 along an orbit 72 at a certain inclined angle, reproduction signals (sync pattern signals) can have substantially constant amplitudes "$A_c$" as shown in Fig. 7B, so that the resultant reference clocks are obtained in stable conditions. These sync pattern 71 may be recorded by way of the similar recording means to that of the pits 65 (will be discussed later).

## PREFORMAT RECORDING

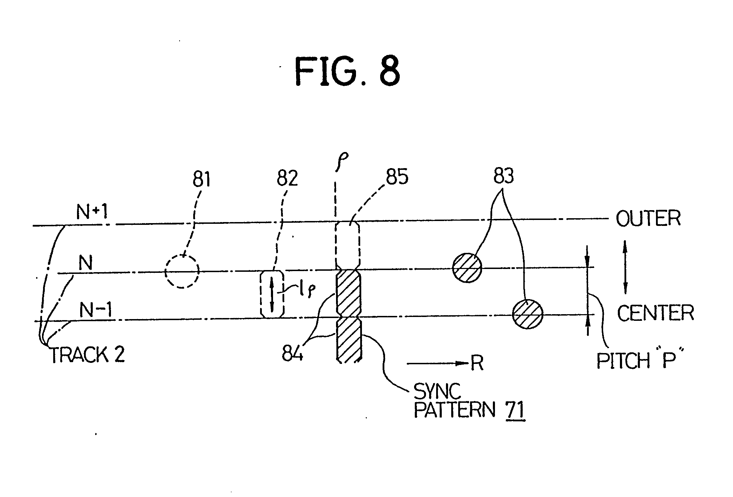

A method (preformat) for recording the sync patterns 71 (multi clock region) shown in Fig. 7, will now be described with reference to Fig. 8. More specifically, Fig. 8 represents a recording method employed in an apparatus where the preformat recording is optically performed while drawing a spiral orbit at a pit of "P" from a center of an optical disk toward an outer portion thereof. The optical preformat recording means is known in the art from, for instance, such a means in which after a resist coated over a glass substrate is exposed by a laser spot, the exposed resist is subjected to the development.

In the preformat recording method shown in Fig. 8, two recording beams having different beam sizes are utilized. That is, both a circular beam 81 and a rectangular beam 82 are scanned over the optical disk 100 with maintaining a relative positional relationship. The circular beam 81 is used to record the normal preformat information pit 83. Then, the rectangular beam 82 is exposed on the optical disk 100 in synchronism with the specific disk rotation position "$\rho$" so as to record rectangular regions 84 on this rotation position "$\rho$". Under the conditions shown in Fig. 8, the track "N" has been just recorded and in the subsequent track "N + 1", a rectangular region 85 positioned outside the recorded rectangular region 84 will be recorded by the rectangular beam 82. The above-defined beam operations are repeated so as to record the sync pattern 71 on the optical disk 100 in the radial direction. It should be noted that a length "$\ell_\rho$" of the rectangular beam 82 in the radius direction thereof must be equal to, or longer than the track pitch "P". An arrow "R" indicated in Fig. 8 represents also the rotation direction of the optical disk 100.

## DETAILED COMPARISON BETWEEN SINGLE CLOCK PIT AND MULTI CLOCK PITS

For a better understanding of particular advantages of the present invention, a detailed comparison between a single-clock pit of the conventional disk and multi-clock pits of the inventive disk will now be described.

As a first comparison, the following is a relationship between the multi clock length and format efficiency, as compared with the conventional single clock pit.

The definitions are as follows:

```
A (B/TrK.) ... total byte number within 1 track
B (B) ........ segment length
servo byte lenth ... C (B)
                    C = M + E
M  ........... byte length of multi clock = m/5 (B)
m  ........... pit number of multi clock
              1B = 5m pits
E  ........... byte length of error detection (B)
S (piece/TrK.) = A/B  ....... segment number
                            (sample number)
```

Rt (rps) .... disk rotation

Remark  :    E(B)  implies  byte  length  of  track  information othe  than  multi  clock  bits (region) and data region.

Format efficiency  :   $F = \beta \cdot \dfrac{B-C}{B} = \beta(1 \quad \dfrac{C}{B} \quad )$

$[0 < \beta \leq 1, \text{ normally } \beta = 1]$

Servo bandwidth   :   $fc(H_z) = \dfrac{\omega c}{2\pi}$

Sampling frequency :  $fs(H_z) = \dfrac{\omega s}{2\pi} = S \cdot Rt = \dfrac{A \cdot Rt}{B}$

$\dfrac{fc}{fs} = \dfrac{Wc}{Ws} = \dot{\eta} \ldots (0 < \eta < \dfrac{1*}{2})$

$\omega c = 2\pi : \eta : fs = \dfrac{2\pi \cdot \eta \cdot A \cdot Rt}{B}$

$fs = \dfrac{1}{ts}$

$\dfrac{1*}{2}$ .... Nyquist frequency

Now assuming that a disturbance $\Phi_E(t) = \Phi_E \sin(\omega t + \Psi)$ is contained in a phase. As previously described, due to the particular advantage of the multi clock pits according to the invention at the respective sampling points tn-1, tn, tn+1, ---, the phase difference may be reduced to zero within a very shorter time period than the time period "$t_{SM}$". An amount thereof is defined by the following equation (1)

$$\Delta\phi(t_n + 0) = \dfrac{\Delta\phi(t_n - 0)}{G\omega} \qquad \ldots\ldots\ldots (1)$$

where $G(\omega)$ is an open loop gain (i e. ameliorative rate) at multi clock region.

It is obvious that the phase error $\Delta\phi(t)$ is equal to a maximal value at the respective sampling points. The maximal value is:

11

EP 0 339 672 A2

$$\Delta\phi(t_{n+1}-0) = \Delta\phi(t_n+0) + \frac{d}{dt}\left\{\phi_E \sin(\omega t+\psi)\right\}\Big/_{t-t_n} \cdot t_{SM}$$

$$= \frac{\Delta\phi(t_n-0)}{G(\omega)} + \phi_E\omega \cdot \cos(\omega t_n+\psi) \cdot t_{SM}$$

In the above equation (2), if $2\pi/t_{SM} \gg \omega$, then a change in $t_{SM}$ is small and a maximal value of $\Delta\phi(t)$ is obtained under the condition: $\cos(\omega t_n + \Psi) = 1$. Furthermore, the steady-state is considered:

$$assuming: \Delta\phi(t_n-0) = \Delta\phi(t_{n+1}-0) = \Delta\phi_{\omega,max},$$

$$\Delta\phi_{\omega,max} = \frac{\Delta\phi_{\omega,max}}{G(\omega)} + \phi_E\,\omega t_{SM}$$

$$\therefore \Delta\phi_{\omega,max} = \frac{\phi_E\,\omega t_{SM}}{1 - \frac{1}{G(\omega)}} \qquad \cdots\cdots (3)$$

It should be noted that $G(\omega)$ is constant with respect to "$\omega$", and also a function having only "m" pit numbers of the multi clock pits. Then $G(\omega)$ is expressed by the following equation (4):

$G(\omega) = \gamma_m$    (4)

That is, it is assumed that this contains the ameliorative rate (gain) of "$\gamma$" per 1 bit multi clock. Then, this value is considered in the above-mentioned equation (3) :

$$\Delta\phi_{\omega\,max} = \frac{\phi_E\,\omega t_{SM}}{1 - \gamma^{-m}} \qquad \cdots\cdots (5)$$

Now, the conventional single clock pit will be considered.

If the following equation (6) is satisfied as to the normal sample system and sample interval $t_{SN}$, it may be considered as a connection system and a circle;

$$\frac{2\pi}{t_{SN}} \gg 2\omega \qquad \cdots\cdots (6)$$

At this time, the phase error $\Delta\phi_{\omega N}$ max is obtained by employing the open loop gain $G(\omega)$:

$$\Delta\phi_{\omega N\,max} = \frac{\phi_E}{G(\omega)} \qquad \cdots\cdots (7)$$

If the loop gain in the secondary delay system is considered, then

$$G(\omega) \doteq \left(\frac{\omega_d}{\omega}\right)^2 \qquad \cdots\cdots\cdots (8)$$

Note that "$\omega c$" is very large in fact due to the phase compensation. This equation (8) is employed, then the following equation (9) is finally obtained:

$$\Delta \phi_{\omega N \, max} = \frac{\omega^2 \cdot \phi_E}{\omega_c^2}$$

$$= \frac{\omega^2 \phi_E \, t_{SN}^2}{4\pi^2 \eta^2} \qquad \cdots\cdots\cdots (9)$$

where

$$\left(\because \omega_c = \frac{\eta \cdot 2\pi}{t_{SN}}\right)$$

Thereafter, comparing the former equations (5) and (9) the sampling times "$t_{SM}$" and "$t_{SN}$" have the following relationships in case of single clock pit and multi clock pits:

If the maximum phase errors are equal to each other,

$$\frac{\phi_E \, \omega \cdot t_{SM}}{1 - r^{-m}} = \frac{\omega^2 \phi_E \cdot t_{SN}^2}{4\pi^2 \eta^2}$$

$$\therefore t_{SM} = \frac{(1 - r^{-m}) \cdot \omega \cdot t_{SN}^2}{4\pi^2 \eta^2}$$

$$\frac{t_{SM}}{t_{SN}} = \frac{(1 - r^{-m}) \omega \cdot t_{SN}}{4\pi^2 \eta^2}$$

where the following conditions are introduced

$$\therefore \xi = \frac{\omega}{\omega_{SN}} = \frac{\omega}{\frac{2\pi}{t_{SN}}}, \quad \text{namely} \quad \omega \cdot t_{SN} = 2\pi \xi$$

Finally,

$$\frac{t_{SM}}{t_{SN}} = \frac{(1 - r^{-m}) \xi}{2\pi \eta^2} \quad \cdots \quad (0 < \xi < \eta) \quad \cdots\cdots (10)$$

13

From the resultant equation (10), the following facts appear:

1) The higher the disturbance frequency "$\omega$" becomes, the larger the ratio of $t_{SM}/t_{SN}$ becomes. That is, the sampling interval can be extended according to the invention if the same amount of error occurrence $\Delta\phi_{max}$ is permitted.

2) Conversely, if "$\omega$" is low, the particular advantage of the multi clock pits will be lost ($\xi \rightarrow 0$).

3) Note that if "$\omega$" is low, the function of the PLL circuit may have the same condition as in the conventional single clock pit.

Then, the format efficiencies of two cases will be obtained as follows.

first, the following is the format efficiency of the conventional single clock pit:

$$F_U = \beta \cdot \left( 1 - \frac{C}{B} \right)$$

$$\left( \begin{array}{l} C = E \\ \omega_c = \frac{2\pi \cdot \eta \cdot A \cdot R_T}{B} \rightarrow B = \frac{2\pi \cdot \eta \cdot A \cdot R_J}{\omega_c} \end{array} \right)$$

$$= \beta \cdot \left( 1 - \frac{\omega_c \cdot E}{2\pi \cdot \eta \cdot A \cdot R_J} \right) \qquad \ldots\ldots\ldots (11)$$

Second, another format efficiency of the multi clock pits according to the invention is as follows:

$$F_m(m) = \beta \cdot \left( 1 - \frac{C'}{B'} \right)$$

$$\left( \begin{array}{l} C = E + \frac{m}{S} \\ B' = \frac{\lambda_{SM}}{\lambda_{SN}} B = \frac{1 - r^{-m}}{2\pi} \cdot \eta \cdot 2\pi \cdot R_J \cdot \frac{A}{\omega_c} \\ = \frac{(1 - r^{-m}) \cdot A \cdot R_J}{\omega_c} \end{array} \right)$$

$$= \beta \cdot \left\{ 1 - \frac{\omega_c \, (E + m/S)}{(1 - r^{-m}) A \cdot R_J} \right\} \qquad \ldots\ldots\ldots (12)$$

Now, the maximal value of $F_M(m)$ is determined as follows:

$$\frac{d}{dm} F_M(m) = \beta \cdot \left\{ \frac{\omega_c E}{A \cdot R_J} \cdot \frac{r^{-m} \ln r}{(1 - r^{-m})^2} - \frac{\omega_c}{S \cdot A \cdot R_J \cdot (1 - r^{-m})} + \frac{\omega_c \cdot m \cdot r^{-m} \ln r}{S \cdot A \cdot R_J (1 - r^{-m})^2} \right\}$$

$$= \frac{\beta \cdot \omega_c}{S \cdot A \cdot R_J (1 - r^{-m})^2} \left( S \cdot E \cdot r^{-m} \ln r - 1 + r^{-m} + m \cdot r^{-m} \ln r \right) \qquad (13)$$

If $\frac{d}{dm} F_M(m) = 0$, the above equation (13) is as follows:

$$5 E \gamma^{-\alpha} \lambda_m - 1 + \gamma^{-\alpha} + m \cdot \gamma^{-\alpha} \lambda_m = 0 \qquad \dots\dots\dots (14)$$

It is obvious from the above equation (14) that "m" is a function of "E" and "γ".

For the sake of simplicity, when "E" and "γ" are used as a parameter, the above equation (12) is calculated so as to obtain the value of "m".

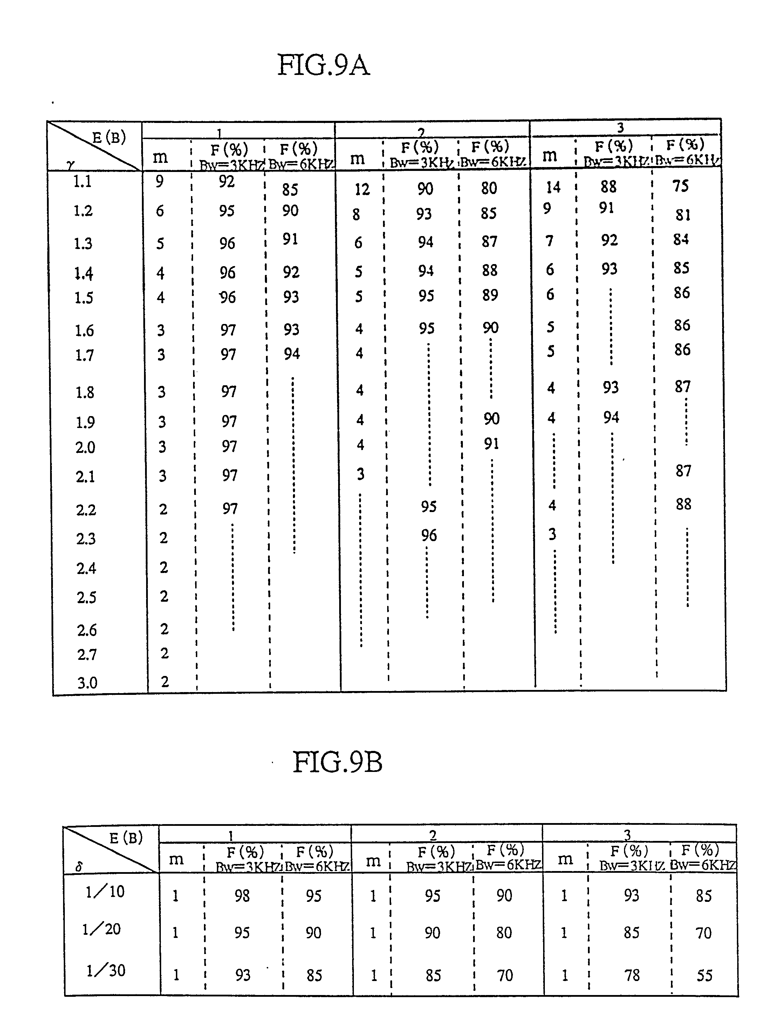

The calculation results of these equations are represented in Figs. 9A and 9B. That is, Fig. 9A represents the calculation results on the multi clock pits according to the invention, whereas Fig. 9B represents the calculation results on the conventional single clock pit.

The above calculations were performed under the conditions that $R_t$ = 60 rps, total = 20,000 (B), and E(B) = 1 to 3 bytes.

From the above-described various data, the following conclusions are obtained.

That is, the multi clock pit numbers representative of the maximum efficiency is determined by the gain "γ" per 1 multi clock pit and the preformat protion (E). In the conventional single clock pit, the maximum format "η" is determined by a ratio of the sample frequency ($f_s$) and the bandwidth

In a certain value of "η", the particular advantage by the multi clock pits is not achieved. That is,

When the typical numerical values are introduced:

$f_c$ = 3KHz - 6KHz
$R_t$ = 60 (rps)
Total = 20,000 (B/Trk)
E = 1 -3 (Bytes)
γ = 1.1 -3.0
η = 1/10 - 1/30,

then the number of the multi clock pits is equal to, or smaller than 14.

## MODIFICATIONS

The present invention is not limited to the above-described preferred embodiments. For instance, the multi clock regions may be directly recorded in the radial form employing an electronic beam drawing apparatus.

While has been described in detail, according to the present invention, more than two periodic sync patterns are formed in each servo block of an optical disk as the timing information of the servo control. As a consequence, the reference clock of the sampled servo type optical disk can be stably reproduced from these sync patterns. Thus, the format efficiency can be increased, and the allowable limit values with respect to the rotation variations and also the manufacturing precision on the sampled servo type optical disk can be increased. Moreover, since the sync patterns are formed in the continuous patterns along the radial direction of the optical disk, the reference clock can be stably reproduced even if the light beam spot runs over a predetermined track in a certain inclined angle.

**Claims**

1. An optical recording medium (100) rotatable around a center (0) thereof comprising:
a spiral-shaped track (2) formed on a surface of the optical recording medium (100) with respect to the center(0), said track (2) containing a plurality of data regions (22) on which data are optically recorded, and a plurality of servo control regions (21) positioned between the data regions(22), on which servo control information of the recording medium (100) has been previously recorded, and each of said servo control regions (21) containing at least a timing information region (26)formed as at least two continuous sync patterns along a rotation direction (R) of the recording medium (100), whereby a reference clock required for servo control of the recording medium (100) is produced by detecting said sync patterns from the respective servo control regions (21).

2. An optical recording medium (100) as claimed in claim 1, wherein each of said sync patterns is formed by a circular pit (26a:26d).

3. An optical recording medium (100) as claimed in claim 2, wherein said sync patterns are formed by four circular pits.

4. An optical recording medium (100) as claimed in claim 1, wherein said servo control region (21) further includes:

a tracking information region (23);

a focusing information region (24) positioned after the tracking information region (23); and

an address detecting signal region (25) positioned after the focusing information region (24) and before the timing information region (26) along the rotation direction (R) of the recording medium (100).

5. An optical recording medium (100) as claimed in claim 1, wherein said servo control region (21) further includes:

a tracking information region (23) positioned after the timing information region (26);

a focusing information region (24) positioned after the tracking information region (23); and,

an address detecting signal region (25) positioned after the focusing information region (24) along the rotation direction (R) of the recording medium (100).

6. An optical recording medium (100) as claimed in claim 1, wherein said servo control region (21) further includes:

a tracking information region (23); and,

a focusing information region (24) positioned after the tracking information region (23) and before the timing information region (26) along the rotation direction (R) of the recording medium (100).

7. An optical recording medium (100) as claimed in claim 1, wherein each of said sync patterns is formed by a rectangular pattern (71) bridging the adjacent tracks (2) and extending from said center (0) of the recording medium (100) toward an outer portion thereof in a radial form.

8. An optical recording medium (100) as claimed in claim 7, wherein said sync patterns are formed by four rectangular patterns.

9. An optical recording medium (100) rotatable around a center (0) thereof comprising:

a plurality of tracks (2) coaxially formed on a surface of the optical recording medium (100) with respect to the center (0), said tracks (2) containing a plurality of data regions (22) on which data are optically recorded, and a plurality of servo control regions (21) positioned between the data regions, on which servo control information of the recording medium (100) has been previously recorded, and each of said servo control regions (21) containing at least a timing information region (26) formed as at least two continuous sync patterns along a rotation direction (R) of the recording medium (100), whereby a reference clock required for the servo control of the recording medium (100) is produced by detecting said sync patterns from the respective servo control regions (21).

10. An optical recording medium (100) as claimed in claim 9, wherein each of said sync patterns is formed by a circular pit (26a:26d).

11. An optical recording medium (100) as claimed in claim 10, wherein said sync patterns are formed by four circular pits.

12. An optical recording medium (100) as claimed in claim 9, wherein said servo control region (21) further includes:

a tracking information region (23);

a focusing information region (24) positioned after the tracking information region (23); and,

an address detecting signal region (25) positioned after the focusing information region (24) and before the timing information region (26) along the rotation direction (R) of the recording medium (100).

13. An optical recording medium (100) as claimed in claim 9, wherein said servo control region (21) further includes:

a tracking information region (23) positioned after the timing information region (26);

a focusing information region (24) positioned after the tracking information region (23); and,

an address detecting signal region (25) positioned after the focussing information region (25) along the rotation direction (R) of the recording medium (100).

14. An optical recording medium (100) as claimed in claim 9, wherein said servo control region (21) further includes:

a tracking information region (23); and,

a focusing information region (24) positioned after the tracking information region (23) and before the timing information region (26) along the rotation direction (R) of the recording medium (100).

15. An optical recording medium (100) as claimed in claim 9, wherein each of said sync patterns is formed by a rectangular pattern (71) bridging the adjacent tracks (2) and extending from said center (0) of the recording medium (100) toward an outer portion thereof in a radial form.

16. An optical recording medium (100) as claimed in claim 15, wherein said sync patterns are formed by four rectangular patterns.

17. An optical recording apparatus (200) employing an optical recording medium (100) rotatable around a center (0) thereof including a spiral-shaped track (2), said track (2) containing a plurality of data regions (22) and a plurality of servo control regions (21) positioned between the data regions, and each of said servo control regions (21) containing at least a timing information region (26) formed as at least two continuous sync patterns along a rotation direction (R) of the recording medium (100), whereby a reference clock required for the servo control of the recording medium (100) is produced by reproducing said sync patterns from the respective servo control regions (21), said optical recording apparatus (200) comprising:
means for optically reading out said sync patterns from said timing information region (26) within said servo control regions (21) prior to recording/reading operations of the data on/from said data regions (22) so as to produce a sync pattern signal; and,
means (50) for reproducing said reference clock as timing information based upon said sync pattern signal derived from said reading means, so as to control said data recording/reading operations in synchronism with said reference clock.

18. An optical recording apparatus (200) as claimed in claim 17, wherein said reference clock reproducing means (50) includes:
at least a phase-locked loop (PLL) circuit (53) for receiving said sync pattern signal intermittently output from said reading means to continuously reproduce said reference clock.

19. An optical recording apparatus (200) as claimed in claim 18, wherein said reference clock reproducing means (50) further includes;
a gate circuit (52) coupled to an input terminal of said PLL circuit (53), for receiving said sync pattern signal intermittently output from said reading means and for supplying the same to said input terminal of the PLL circuit (53);
a counter (5) for counting said reference clock derived from said PLL circuit (53) so as to control said gate circuit (52); and
a pattern matching circuit (55) for receiving a phase lock signal (56) from said PLL circuit (53) so as to detect a specific pattern recorded on a region within said servo control regions (21) preceding said present timing information region (26), whereby the gate circuit (52) is controlled based upon a result of said specific pattern matching operation.

20. An optical recording apparatus (200) employing an optical recording medium (100) rotatable around a center (0) thereof including a plurality of tracks (2) coaxially formed thereon, said tracks (2) containing a plurality of data regions (22), and a plurality of servo control regions (21) positioned between the data regions, and each of said servo control regions (21) containing at least a timing information region (26) formed as at least two continuous sync patterns along a rotation direction (R) of the recording medium (100), whereby a reference clock required for the servo control of the recording medium (100) is produced by reproducing said sync patterns from the respective servo control regions (21), said optical recording apparatus (200) comprising:
means for optically reading out said sync patterns from said timing information region (26) within said servo control regions (21) prior to recording/reading operations of the data on/from said data regions (22) so as to produce a sync pattern signal; and
means (50) for reproducing said reference clock as timing information based upon said sync pattern signal derived from said reading means, so as to control said data recording/reading operations in synchronism with said reference clock.

21. An optical recording apparatus (200) as claimed in claim 20, wherein said reference clock reproducing means (50) includes:
at least a phase-locked loop (PLL) circuit (53) for receiving said sync pattern signal intermittently output from said reading means to continuously reproduce said reference clock.

22. An optical recording apparatus (200) as claimed in claim 21, wherein said reference clock reproducing means (50) further includes;
a gate circuit (52) coupled to an input terminal of said PLL circuit (53), for receiving said sync pattern signal intermittently output from said reading means and for supplying the same to said input terminal of the PLL circuit (53);
a counter (5) for counting said reference clock derived from said PLL circuit (53) so as to control said gate circuit (52); and
a pattern matching circuit (55) for receiving a phase lock signal (56) from said PLL circuit (53) so as to detect a specific pattern recorded on a region within said servo control regions (21) preceding said present timing information region (26), whereby the gate circuit (52) is controlled based upon a result of said specific pattern matching operation.

17

# FIG.1

# FIG. 2

EP 0 339 672 A2

PRIOR ART
# FIG.3A

SERVO
BLOCK 21'  31

23  24  27

DATA BLOCK 22

# FIG.3B

SERVO BLOCK 21B  31

26a  26b
26c  26d

23  24  25

SYNC
PATTERN 26

DATA BLOCK 22

# FIG.3C

SERVO BLOCK 21C  31

26a  26b  26d
26c

SYNC
PATTERN
26

23  24  25

DATA BLOCK 22

# FIG.3D

SERVO BLOCK 21D  31

26a  26b  26c

23  24  SYNC  26d
PATTERN
26

DATA BLOCK 22

R

FIG.4A
FIG.4B
FIG.4C
FIG.4D

EP 0 339 672 A2

# FIG. 5

REPRODUCED SIGNAL FROM OPTICAL DISK 100

FOCUSING ERROR SIGNAL

CLOCK REPRODUCING CIRCUIT 50

200

51, 52 GATE, 53 PLL, 55 PATTERN MATCHING, 54/56 COUNTER, 57 DEM, 58 TRAC-SRV, 59 FOC-SRV, 60, 61, 62, 63, 64

TO EXTERNAL CIRCUITS

EP 0 339 672 A2

# FIG.6A

TRACK 2    PITS 65    SPOT ORBIT 66

65

65

65

# FIG. 6B

AMPLITUDE

$A_1$    $A_2$    $A_3$    $A_4$

O    t

# FIG.7A

TRACK 2    71    72

# FIG.7B

AMPLITUDE    $A_C$

t

# FIG. 8

# FIG.9A

| E(B) / γ | 1 m | 1 F(%) Bw=3KHz | 1 F(%) Bw=6KHz | 2 m | 2 F(%) Bw=3KHz | 2 F(%) Bw=6KHz | 3 m | 3 F(%) Bw=3KHz | 3 F(%) Bw=6KHz |
|---|---|---|---|---|---|---|---|---|---|
| 1.1 | 9 | 92 | 85 | 12 | 90 | 80 | 14 | 88 | 75 |
| 1.2 | 6 | 95 | 90 | 8 | 93 | 85 | 9 | 91 | 81 |
| 1.3 | 5 | 96 | 91 | 6 | 94 | 87 | 7 | 92 | 84 |
| 1.4 | 4 | 96 | 92 | 5 | 94 | 88 | 6 | 93 | 85 |
| 1.5 | 4 | 96 | 93 | 5 | 95 | 89 | 6 | | 86 |
| 1.6 | 3 | 97 | 93 | 4 | 95 | 90 | 5 | | 86 |
| 1.7 | 3 | 97 | 94 | 4 | | | 5 | | 86 |
| 1.8 | 3 | 97 | | 4 | | | 4 | 93 | 87 |
| 1.9 | 3 | 97 | | 4 | | 90 | 4 | 94 | |
| 2.0 | 3 | 97 | | 4 | | 91 | | | |
| 2.1 | 3 | 97 | | 3 | | | | | 87 |
| 2.2 | 2 | 97 | | | 95 | | 4 | | 88 |
| 2.3 | 2 | | | | 96 | | 3 | | |
| 2.4 | 2 | | | | | | | | |
| 2.5 | 2 | | | | | | | | |
| 2.6 | 2 | | | | | | | | |
| 2.7 | 2 | | | | | | | | |
| 3.0 | 2 | | | | | | | | |

# FIG.9B

| E(B) / δ | 1 m | 1 F(%) Bw=3KHz | 1 F(%) Bw=6KHz | 2 m | 2 F(%) Bw=3KHz | 2 F(%) Bw=6KHz | 3 m | 3 F(%) Bw=3KHz | 3 F(%) Bw=6KHz |
|---|---|---|---|---|---|---|---|---|---|
| 1/10 | 1 | 98 | 95 | 1 | 95 | 90 | 1 | 93 | 85 |
| 1/20 | 1 | 95 | 90 | 1 | 90 | 80 | 1 | 85 | 70 |
| 1/30 | 1 | 93 | 85 | 1 | 85 | 70 | 1 | 78 | 55 |